# EUROPEAN PATENT APPLICATION

(11) **EP 4 601 261 A1**
(43) Date of publication of application: **13.08.2025**
(21) Application number: 23881306.7
(22) Date of filing: 30.06.2023
(51) Int. Cl.: H04L 67/10

(54) **CLOUD RESOURCE MANAGEMENT SYSTEM AND DEPLOYMENT METHOD THEREFOR**

(30) Priority: 24.10.2022 CN 202211300013; 14.04.2023 CN 202310402195
(71) Applicant: Huawei Cloud Computing Technologies Co., Ltd., Guiyang, Guizhou 550025 (CN)
(72) Inventor: JIANG, Tao, Guiyang, Guizhou 550025 (CN); WEN, Jiajia, Guiyang, Guizhou 550025 (CN)
(74) Representative: Goddar, Heinz J.
(86) International application number: PCT/CN2023/104680
(87) International publication number: WO 2024/087717

(57) **Abstract**

This application discloses a cloud resource management system and a deployment method thereof. The cloud resource management system includes a cloud resource management node, an underlying management module, and an external resource management module. The cloud resource management node is configured to deploy the underlying management module; the underlying management module is configured to manage an internal resource cluster and deploy the external resource management module based on the internal resource cluster; and the external resource management module is configured to manage an external resource cluster, where the external resource management module includes a basic management module, and the basic management module is configured to: manage a basic resource group in the external resource cluster, create a virtual instance based on the basic resource group, and deploy a service of a tenant in the virtual instance. The basic management module in this application manages only the basic resource group in the external resource cluster, so that a remaining resource group occupied by the basic management module can be effectively controlled, thereby helping reduce construction costs of the cloud resource management system.

## Description

This application claims priorities to Chinese Patent Application No. 202211300013.1, filed on October 24, 2022 and entitled "DEPLOYMENT METHOD OF RESOURCE CLUSTER MANAGEMENT SYSTEM", and to Chinese Patent Application No. 202310402195.1, filed on April 14, 2023 and entitled "CLOUD RESOURCE MANAGEMENT SYSTEM AND DEPLOYMENT METHOD THEREOF", both of which are incorporated herein by reference in their entireties.

### TECHNICAL FIELD

This application relates to the field of resource management technologies, and in particular, to a cloud resource management system and a deployment method thereof.

### BACKGROUND

In a public cloud or an enterprise private cloud, resource pools are usually classified into a management area resource pool and a tenant area resource pool. The management area resource pool and the tenant area resource pool are completely independent of each other. Cloud services deployed in either type of resource pool are fixedly deployed in this type of resource pool through the lifecycle, but are not extended to the other area for co-deployment or migration deployment. Virtual instances created in the management area resource pool are used for deploying resource management systems, basic cloud services, operation and maintenance services, security services, and the like for managing the tenant area resource pool.

Currently, cloud services in the management area resource pool are in a form of virtual instances and do not have a scaling capability. To cope with impact of peak service traffic on performance, large-scale virtual machines are generally selected in the management area resource pool to deploy large-scale service clusters.

However, the service peak traffic usually lasts for a very short period of time, which wastes a large amount of resources in the management area resource pool, and leads to high construction costs of a resource management system.

### SUMMARY

This application provides a cloud resource management system and a deployment method thereof. A basic management module in this application manages only a basic resource group in an external resource cluster, so that a resource occupied by the basic management module can be effectively controlled, thereby helping reduce construction costs of the cloud resource management system. Technical solutions provided in this application are as follows:

According to a first aspect, this application provides a cloud resource management system, including a cloud resource management node, an underlying management module, and an external resource management module. The cloud resource management node is configured to deploy the underlying management module; the underlying management module is configured to manage an internal resource cluster and deploy the external resource management module based on the internal resource cluster; and the external resource management module is configured to manage an external resource cluster, where the external resource management module includes a basic management module, and the basic management module is configured to: manage a basic resource group in the external resource cluster, create a virtual instance based on the basic resource group, and deploy a service of a tenant in the virtual instance.

In the cloud resource management system, the basic management module manages only the basic resource group in the external resource cluster, rather than all resources in the external resource cluster. In this way, a quantity of resources in the external resource cluster that are managed by the basic management module is controlled, and a resource occupied by the basic management module is effectively controlled, to reduce a probability that a scale of the basic management module increases with a scale of the external resource cluster, thereby helping reduce construction costs of the cloud resource management system. In addition, the basic management module manages some resources in the external resource cluster, to provide a condition for the basic management module to extend an entire management and control plane of the cloud resource management system based on the external resource cluster, so that the cloud resource management system has a capability of managing and controlling an ultra-large-scale infrastructure resource pool.

In an implementation, the external resource management module further includes an extension management module. In this case, the basic management module is specifically configured to deploy the extension management module based on the basic resource group. The basic management module specifically provides a cloud service for the tenant through the extension management module. For example, the extension management module is configured to: manage an extended resource group in the external resource cluster, create the virtual instance based on the extended resource group, and deploy the service of the tenant in the virtual instance.

Optionally, the basic management module is further configured to deploy the extension management module based on the basic resource group, and the extension management module is configured to manage the extended resource group in the external resource cluster. The basic management module is specifically configured to create the virtual instance based on a remaining resource group that is in the basic resource group and that is not occupied by the extension management module, and deploy the service of the tenant in the virtual instance.

The foregoing process of deploying the extension management module may be considered as a process of further deploying the external resource management module when a service volume increases. In this way, the basic management module is deployed based on the internal resource cluster, and the extension management module is deployed based on the external resource cluster, so that a resource occupied by the basic management module can be effectively controlled, and a scale of a minimum starting unit can be limited. When a scale of the external resource cluster needs to change in accordance with the service volume, the scale of the minimum starting unit does not need to increase with the scale of the external resource cluster, so that the minimum starting unit has characteristics of being stable and reliable, and construction costs of the cloud resource management system are reduced.

In an implementation, the basic management module is specifically configured to create a first virtual instance cluster based on the basic resource group, and deploy the extension management module in the first virtual instance cluster.

In another implementation, the basic management module is specifically configured to create the first virtual instance cluster based on the basic resource group; and the underlying management module is further configured to deploy the extension management module in the first virtual instance cluster.

Optionally, a resource used for deploying the underlying management module is isolated from the external resource cluster, and/or isolated from the internal resource cluster. When the resource used for deploying the underlying management module is isolated from the external resource cluster and the internal resource cluster, the underlying management module does not depend on the internal resource cluster or the external resource cluster, and the underlying management module may be considered as a completely self-contained service of the cloud resource management node. This allows the underlying management module to be decoupled from the internal resource cluster and the external resource cluster, and allows the underlying management module to be physically isolated from the internal resource cluster and the external resource cluster, to achieve fault isolation and prevent fault spreading. Even after a fault occurs, a complete cloud resource management system can still be rebuilt based on the underlying management module. In addition, the internal resource cluster and the external resource cluster may be isolated from each other.

Optionally, to further ensure security of the cloud resource management system, the underlying management module may be deployed on a plurality of cloud resource management nodes, so that the underlying management module has a disaster recovery capability.

In an implementation, the underlying management module is specifically configured to create a second virtual instance cluster based on the internal resource cluster, and deploy the basic management module of the external resource management module in the second virtual instance cluster.

Optionally, the basic management module may include at least one of a basic common service and necessary middleware. The common service is a service that is shared by cloud services that can be provided by the cloud resource management system by using the external resource cluster. For example, the common service may be a database service. The necessary middleware is middleware required by all cloud services that can be provided by the cloud resource management system by using the external resource cluster. For example, the necessary middleware may be a cache and a message queue.

Alternatively, the basic management module may not include at least one of the basic common service and the necessary middleware. In an implementation, the underlying management module is further configured to deploy at least one of the basic common service and the necessary middleware based on the internal resource cluster. An implementation process includes: The underlying management module creates a third virtual instance cluster based on the internal resource cluster, and deploys at least one of the basic common service and the necessary middleware in the third virtual instance cluster.

The second virtual instance cluster and the third virtual instance cluster may be instance clusters created by the underlying management module based on the entire internal resource cluster at one time, or may be instance clusters created by the underlying management module in a plurality of steps, each time based on some resources in the internal resource cluster. This is not specifically limited in this application.

A subsystem that includes the underlying management module and the basic management module may be considered as a most basic management subsystem in the cloud resource management system. The most basic management subsystem is a minimum scale form in the cloud resource management system that maintains a normal running status when the service volume of the tenant is the minimum. Therefore, the most basic management subsystem is also referred to as a minimum starting unit of the cloud resource management system. The minimum starting unit includes: a most underlying completely self-contained computing and storage root service, an internal resource cluster managed by the root service, a basic common service and necessary middleware provisioned based on the internal resource cluster, and a basic management module that manages an external resource cluster of a specific scale. It can be learned that the minimum starting unit exists independently of the external resource cluster, and is completely decoupled from the external resource cluster. This achieves fault isolation between the minimum starting unit and the external resource cluster. In addition, a scale of the minimum starting unit is controlled, and does not increase with a capacity of the external resource cluster, so that costs of the cloud resource management system are effectively controlled. The minimum starting unit is equivalent to a basic input/output system of a computer, and is a most solid and reliable bastion of the cloud resource management system. The minimum starting unit can boot and initialize the entire cloud resource management system at a minimum cost and can extend a complete cloud resource management system based on the minimum starting unit. This ensures that the complete cloud resource management system can be gradually rebuilt based on the minimum starting unit even after a severe disaster occurs.

Optionally, the external resource management module may include a plurality of extension management modules. Any two of the extension management modules may be isolated from each other, and/or the basic management module may be isolated from any one of the extension management modules. For example, the external resource management module may use a grid architecture. To be specific, the entire external management module uses a multi-service grid form, and the basic management module and each extension management module each are an independent service grid. When any two of the extension management modules are isolated from each other, fault propagation between the extension management modules can be avoided, so that reliability of the extension management modules is ensured. Similarly, when the basic management module and the extension management modules are isolated from each other, fault propagation between the extension management modules and the basic management module can be avoided, so that reliability of the extension management modules and the basic management module is ensured.

In an implementation, the virtual instance is a container or a virtual machine.

According to a second aspect, this application provides a deployment method of a cloud resource management system. The method is applied to the cloud resource management system, and the cloud resource management system includes a cloud resource management node, an underlying management module, and an external resource management module. The method includes: The cloud resource management node deploys the underlying management module; the underlying management module manages an internal resource cluster and deploys the external resource management module based on the internal resource cluster; and the external resource management module manages an external resource cluster, where the external resource management module includes a basic management module, and the basic management module manages a basic resource group in the external resource cluster, creates a virtual instance based on the basic resource group, and deploys a service of a tenant in the virtual instance.

Optionally, the external resource management module further includes an extension management module, and the method further includes: The basic management module deploys the extension management module based on the basic resource group; and the extension management module manages an extended resource group in the external resource cluster, creates the virtual instance based on the extended resource group, and deploys the service of the tenant in the virtual instance.

Optionally, the external resource management module further includes an extension management module, and the method further includes: The basic management module deploys the extension management module based on the basic resource group, where the extension management module is configured to manage an extended resource group in the external resource cluster; and the basic management module creates the virtual instance based on a remaining resource group that is in the basic resource group and that is not occupied by the extension management module, and deploys the service of the tenant in the virtual instance.

Optionally, that the basic management module deploys the extension management module based on the basic resource group includes: The basic management module creates a first virtual instance cluster based on the basic resource group, and deploys the extension management module in the first virtual instance cluster.

Optionally, that the basic management module deploys the extension management module based on the basic resource group includes: The basic management module creates a first virtual instance cluster based on the basic resource group; and the underlying management module deploys the extension management module in the first virtual instance cluster.

Optionally, a resource used for deploying the underlying management module is isolated from the external resource cluster, and/or isolated from the internal resource cluster.

Optionally, the underlying management module has a disaster recovery capability.

Optionally, that the underlying management module deploys the basic management module of the external resource management module based on the internal resource cluster includes: The underlying management module creates a second virtual instance cluster based on the internal resource cluster, and deploys the external resource management module in the second virtual instance cluster.

Optionally, the basic management module includes at least one of a basic common service and necessary middleware.

Optionally, the method further includes: the underlying management module deploys at least one of the basic common service and the necessary middleware based on the internal resource cluster.

Optionally, that the underlying management module deploys at least one of the basic common service and the middleware based on the internal resource cluster includes: The underlying management module creates a third virtual instance cluster based on the internal resource cluster, and deploys at least one of the basic common service and the necessary middleware in the third virtual instance cluster.

Optionally, the external resource management module includes a plurality of extension management modules. Any two of the extension management modules are isolated from each other, and/or the basic management module is isolated from any one of the extension management modules.

Optionally, the virtual instance is a container or a virtual machine.

According to a third aspect, this application provides a computing device, including a memory and a processor. The memory stores program instructions, and the processor runs the program instructions to perform the method provided in any one of the second aspect and the possible implementations of the second aspect in this application.

According to a fourth aspect, this application provides a computing device cluster, including a plurality of computing devices. The plurality of computing devices include a plurality of processors and a plurality of memories, the plurality of memories store program instructions, and the plurality of processors run the program instructions, so that the computing device cluster performs the method provided in any one of the second aspect and the possible implementations of the second aspect in this application.

According to a fifth aspect, this application provides a computer-readable storage medium. The computer-readable storage medium is a non-volatile computer-readable storage medium, and the computer-readable storage medium includes program instructions. When the program instructions are run on a computing device, the computing device is enabled to perform the method provided in any one of the second aspect and the possible implementations of the second aspect in this application.

According to a sixth aspect, this application provides a computer program product including instructions. When the computer program product runs on a computer, the computer is enabled to perform the method provided in any one of the second aspect and the possible implementations of the second aspect in this application.

### BRIEF DESCRIPTION OF DRAWINGS

FIG. 1 is a diagram of a structure of an implementation environment related to a deployment method of a cloud resource management system according to an embodiment of this application;
FIG. 2 is a diagram of a deployment process of a cloud resource management system according to an embodiment of this application;
FIG. 3 is a flowchart of a deployment method of a cloud resource management system according to an embodiment of this application;
FIG. 4 is a diagram of deploying an underlying management module according to an embodiment of this application;
FIG. 5 is a diagram of an underlying management module managing an internal resource cluster according to an embodiment of this application;
FIG. 6 is a diagram of deploying a basic management module, a basic common service, and necessary middleware according to an embodiment of this application;
FIG. 7 is a diagram of a basic management module managing a basic resource group according to an embodiment of this application;
FIG. 8 is a flowchart of another deployment method of a cloud resource management system according to an embodiment of this application;
FIG. 9 is a diagram of extending a K8s cluster according to an embodiment of this application;
FIG. 10 is a diagram of an extension management module managing an extended resource group according to an embodiment of this application;
FIG. 11 is a flowchart of still another deployment method of a cloud resource management system according to an embodiment of this application; and
FIG. 12 is a diagram of a structure of a computing device according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, the following first explains technologies and the background in embodiments of this application.

Virtualization (virtualization) is a resource management technology that abstracts and converts various physical resources of a host, such as computing resources, network resources, and storage resources, and presents processed resources. This breaks an indivisibility barrier between physical structures of the host, allowing a user to use these resources in a better manner than an original configuration. Resources used through virtualization are referred to as virtual resources. The virtual resources are not limited by a setup mode, a setting region, or a physical configuration of existing physical resources.

A host (physical machine, PM) is a physical resource carrying a virtualization technology. The host is also referred to as a physical machine. Generally, a host configured to deploy a virtual instance is a physical server. The physical machine includes a plurality of physical devices. For example, the physical server includes physical devices such as a processor and a memory. A plurality of virtual instances may be deployed on one host, and the plurality of virtual instances deployed on a same host share a physical resource of the host. Based on different usage conditions, one host may be deployed with virtual instances that belong only to one user or may be deployed with virtual instances that belong to a plurality of users.

A resource pool is a set of various hardware resources and software resources in a cloud computing data center. Generally, resources in the resource pool may be classified into computing resources, storage resources, and network resources based on resource types.

A virtual instance runs on an operating system of the host, and the virtual instance is provided with an operating system. The operating system of the virtual instance runs an application program, and the application program is configured to implement a service of a user. The virtual instance may use a hardware resource of the host. Different virtual instances are isolated from each other. Generally, the virtual instance may be a virtual machine or a container.

A virtual machine (virtual machine, VM) is a complete computer system that is simulated by using the virtualization technology, that has complete hardware system functions, and that runs in an entirely isolated environment. Some instruction subsets of the virtual machine may be processed in a host (host) machine, and other instructions may be executed through emulation. The virtual machine is also referred to as a virtual server.

The virtual machine may be considered as a set of a plurality of virtual devices, and the set of the plurality of devices is a complete computer system that has complete hardware system functions, and that runs in an entirely isolated environment. A virtual device is obtained through virtualization by using the virtualization technology and based on a physical device that can share resources. For example, based on the virtualization technology, a virtual processor obtained through virtualization based on a processor is a virtual device. For another example, based on the virtualization technology, a training card obtained through virtualization based on a field programmable gate array (field programmable gate array, FPGA) is also a virtual device.

A container provides a lightweight virtual running environment. The container may be obtained by packaging all code, libraries, and dependencies of an application program of a user into an image. When being executed, the image runs in the virtual running environment. In this case, the container is a runtime instance of the image, and is similar to a lightweight sandbox and can be launched, started, stopped, and deleted. The image does not share resources such as a memory, a processor (for example, a central processing unit (central processing unit, CPU)), or a disk of the host machine with another image. This implements container isolation between the image and the host and between the image and the another image, to ensure that a process in the container cannot be used for monitoring any process or resource outside the container.

Container technologies include docker, kubernetes, coreos, and other container technologies. The following uses the kubernetes container technology as an example.

Kubernetes is a container orchestration engine that is developed by Google (Google), and supports automatic deployment, large-scale scaling, and application containerization management. In kubernetes, a plurality of containers may be created, and each container runs one application instance. When one application program is deployed in a production environment, a plurality of application instances of the application program may be deployed generally. A built-in load balancing policy is used for managing, discovering, and accessing the plurality of application instances. Operation and maintenance personnel do not need to perform complex manual configuration and processing. A module that uses the kubernetes container technology to manage containers may be referred to as a kubernetes management module (a K8s management module for short). A container implemented by using the kubernetes container technology may be referred to as a kubernetes container (a K8s container for short).

Embodiments of this application provide a cloud resource management system and a deployment method thereof. In the deployment method of the cloud resource management system, a cloud resource management node of the cloud resource management system deploys an underlying management module; the underlying management module manages an internal resource cluster and deploys an external resource management module based on the internal resource cluster; and the external resource management module manages an external resource cluster, where the external resource management module includes a basic management module, and the basic management module manages a basic resource group in the external resource cluster and deploys a service of a tenant based on the basic resource group.

In the cloud resource management system and the deployment method thereof, the basic management module manages only the basic resource group in the external resource cluster, rather than all resources in the external resource cluster. In this way, a quantity of resources in the external resource cluster that are managed by the basic management module is controlled, and a resource occupied by the basic management module is effectively controlled, to reduce a probability that a scale of the basic management module increases with a scale of the external resource cluster, thereby helping reduce construction costs of the cloud resource management system. In addition, the basic management module manages some resources in the external resource cluster, to provide a condition for the basic management module to extend an entire management and control plane of the cloud resource management system based on the external resource cluster, so that the cloud resource management system has a capability of managing and controlling an ultra-large-scale infrastructure resource pool.

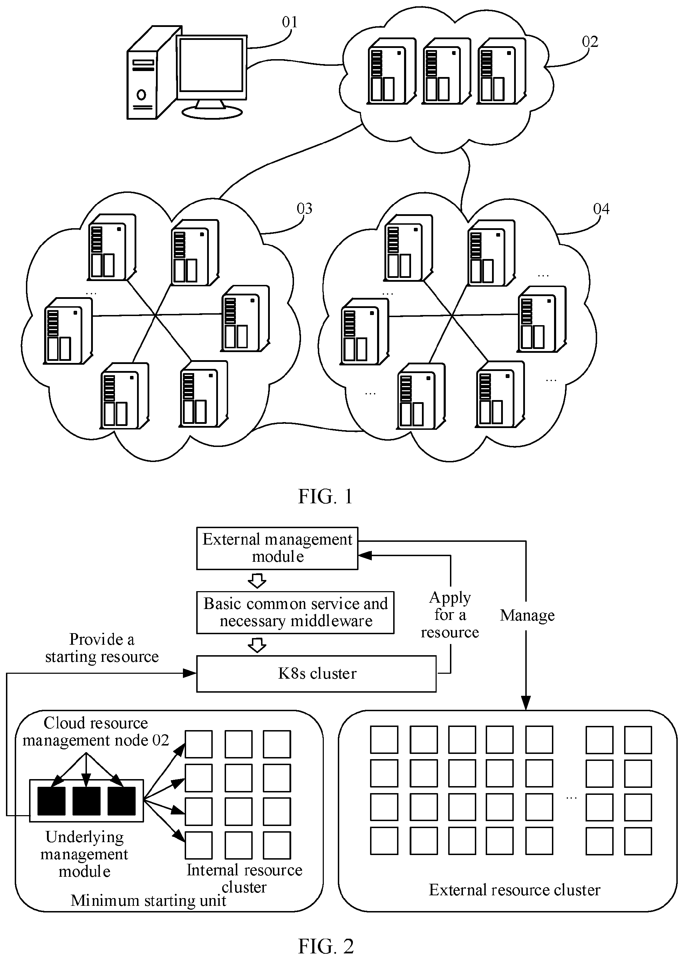

FIG. 1 is a diagram of a structure of an implementation environment related to a deployment method of a cloud resource management system according to an embodiment of this application. As shown in FIG. 1, the implementation environment includes a client 01, a cloud resource management node 02, an internal resource cluster 03, and an external resource cluster 04. Communication connections can be established between the client 01 and the cloud resource management node 02, between the cloud resource management node 02 and the internal resource cluster 03, between the cloud resource management node 02 and the external resource cluster 04, and between the internal resource cluster 03 and the external resource cluster 04. For example, the communication connection may be established between the client 01 and the cloud resource management node 02 over a network. Optionally, the network may be a local area network, an internet, or another network. This is not limited in embodiments of this application.

In the implementation environment, operation and maintenance personnel of the cloud resource management system may interact with the cloud resource management node 02 through the client 01. For example, the operation and maintenance personnel may send, to the cloud resource management node 02 through the client 01, an indication for deploying the cloud resource management system, to indicate the cloud resource management node 02 to deploy the cloud resource management system based on a resource of the cloud resource management node 02, the internal resource cluster 03, and the external resource cluster 04. The cloud resource management system is configured to manage a resource of the external resource cluster 04, and provide a cloud service for a tenant based on the resource of the external resource cluster 04. As shown in FIG. 2, after receiving the indication, the cloud resource management node 02 can perform, based on the resource of the cloud resource management node 02, the internal resource cluster 03, and the external resource cluster 04, the deployment method of the cloud resource management system provided in embodiments of this application. For example, the cloud resource management node 02 may deploy an underlying management module based on the resource of the cloud resource management node 02. The underlying management module is controlled to manage the internal resource cluster 03, create a container cluster management system (Kubernetes, K8s for short) cluster based on the internal resource cluster 03, and deploy at least one of a basic common service and necessary middleware in the K8s cluster. In addition, the underlying management module deploys an external resource management module, manages the external resource cluster 04 through the external management module, and provides the cloud service for the tenant based on the external resource cluster 04.

Optionally, the client 01 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like. The cloud resource management node 02 may be a cloud server or a cloud physical machine, or a cloud server cluster or a physical machine cluster including a plurality of cloud servers, or a cloud computing service center. The internal resource cluster 03 and the external resource cluster 04 may be server clusters including a plurality of servers, or may be cloud computing service centers. A large quantity of basic resources owned by a cloud service provider are deployed in the cloud computing service center. For example, computing resources, storage resources, and network resources are deployed in the cloud computing service center. The cloud computing service center may implement, based on the large quantity of basic resources, the deployment method of the cloud resource management system provided in embodiments of this application. When the cloud resource management node 02, the internal resource cluster 03, and the external resource cluster 04 are implemented through the cloud computing service center, the deployment method of the cloud resource management system provided in embodiments of this application is actually to construct a resource management and control architecture of the cloud computing service center, to provide the cloud service for the tenant based on the resource management and control architecture.

It should be noted that the cloud resource management node 02, the internal resource cluster 03, and the external resource cluster 04 in the implementation environment may alternatively be implemented through another resource platform in addition to the cloud computing service center. This is not specifically limited in embodiments of this application.

It should be understood that the foregoing content is an example of an application scenario of the deployment method of the cloud resource management system provided in embodiments of this application, and is not intended to limit the application scenario of the deployment method of the cloud resource management system. A person of ordinary skill in the art may learn that, as a service requirement changes, the application scenario of the deployment method may be adjusted based on an application requirement. Examples are not listed one by one in embodiments of this application.

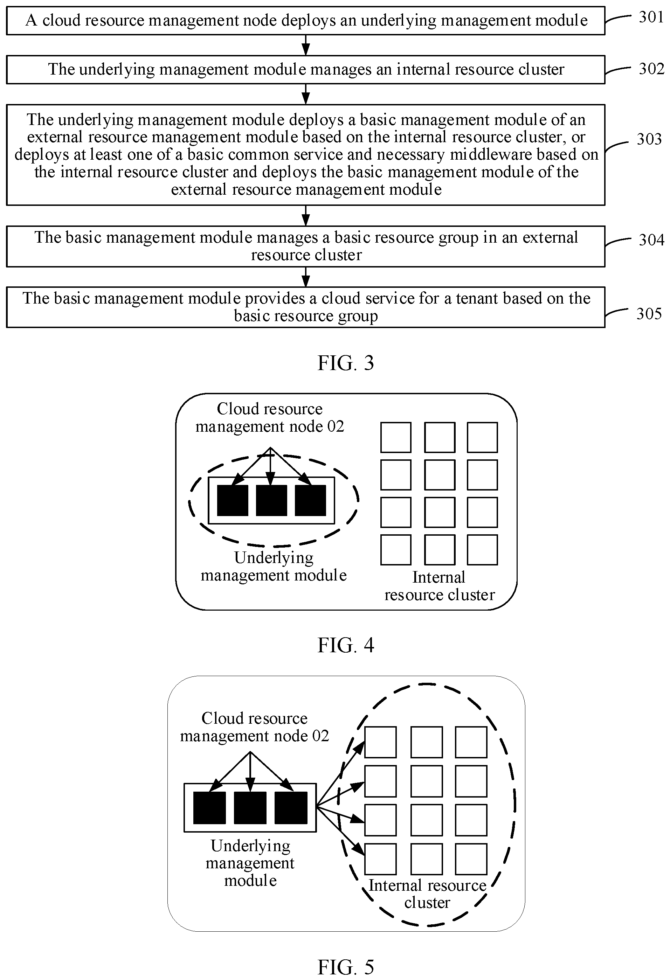

The following first describes a deployment method of a cloud resource management system provided in an embodiment of this application. As shown in FIG. 3, the deployment method of the cloud resource management system includes the following steps.

Step 301: A cloud resource management node deploys an underlying management module.

During the deployment of the cloud resource management system, the cloud resource management node may first deploy the underlying management module in the cloud resource management node. The underlying management module may be considered as a basis of the entire cloud resource management system. After the underlying management module is deployed, another module in the cloud resource management system can continue to be deployed based on the underlying management module. In an implementation, an implementation in which the cloud resource management node deploys the underlying management module includes: The cloud resource management node deploys the underlying management module based on a resource of the cloud resource management node. The cloud resource management node may be a physical machine or the like. In this case, deployment of the underlying management module is actually deployment of the underlying management module based on a memory resource and a computing resource of the physical machine.

A resource used for deploying the underlying management module may be isolated from an external resource cluster, and/or isolated from an internal resource cluster. The internal resource cluster is used by a management module of the cloud resource management system. The external resource cluster is used for providing a cloud service for a tenant. Both the internal resource cluster and the external resource cluster may be server clusters including a plurality of servers, or may be cloud computing service centers. When the resource used for deploying the underlying management module is isolated from the external resource cluster and the internal resource cluster, the underlying management module does not depend on the internal resource cluster or the external resource cluster, and the underlying management module may be considered as a completely self-contained service of the cloud resource management node. This allows the underlying management module to be decoupled from the internal resource cluster and the external resource cluster, and allows the underlying management module to be physically isolated from the internal resource cluster and the external resource cluster, to achieve fault isolation and prevent fault spreading. Even after a fault occurs, a complete cloud resource management system can still be rebuilt based on the underlying management module. In addition, the internal resource cluster and the external resource cluster may be isolated from each other.

Optionally, to further ensure security of the cloud resource management system, the underlying management module may be deployed on a plurality of cloud resource management nodes, so that the underlying management module has a disaster recovery capability. For example, black squares in FIG. 4 represent physical machines, and blank squares in FIG. 4 represent the internal resource cluster. FIG. 4 shows three physical machines. The three physical machines may deploy the underlying management module based on resources of the three physical machines, so that the underlying management module has a node-level local disaster recovery capability.

It can be learned from a deployment manner of the underlying management module that the deployment of the underlying management module does not depend on any resource outside the cloud resource management node, but depends on the resource of the cloud resource management node. The underlying management module may be considered as a service born by the cloud resource management node, and an external resource management module or the like may be considered as an upper-layer service deployed based on the underlying management module. Therefore, the underlying management module is also referred to as a root service. The deployment of the underlying management module does not depend on any resource outside the cloud resource management node, and the cloud resource management node does not belong to the external resource cluster. Therefore, the root service may be considered as a most underlying completely self-contained computing and storage root service in the cloud resource management system. In this way, when a scale of the external resource cluster needs to change in accordance with a service volume, the underlying management module does not need to increase with the scale of the external resource cluster, so that the underlying management module has characteristics of being stable and reliable, and construction costs of the cloud resource management system can be reduced.

Step 302: The underlying management module manages the internal resource cluster.

The underlying management module manages the internal resource cluster by performing operations such as installation of an operating system, allocation of an internet protocol (internet protocol, IP) address, and installation of a client on a server in the internal resource cluster. After performing the operations such as the installation of the operating system, the allocation of the IP address, and the installation of the client on the server in the internal resource cluster, the underlying management module can obtain a resource usage condition of the server through the client and allocate a resource of the server. Therefore, the internal resource cluster can be managed. As shown in FIG. 5, blank blocks in FIG. 5 represent servers in the internal resource cluster. The underlying management module may perform operations such as installation of operating systems, allocation of IP addresses, and installation of clients on these servers, to manage these servers, that is, manage the internal resource cluster.

Step 303: The underlying management module deploys a basic management module of the external resource management module based on the internal resource cluster, or deploys at least one of a basic common service and necessary middleware based on the internal resource cluster and deploys the basic management module of the external resource management module.

The external resource management module is configured to manage the external resource cluster. The external resource management module includes the basic management module and an extension management module. The extension management module is deployed based on a resource managed by the basic management module. The basic management module may be considered as a basis for outward expansion of the external resource management module. Therefore, a management and control scope of the basic management module needs to cover at least a resource required for deploying the extension management module. For example, when the external resource management module includes the basic management module and a first-level extension management module, and the extension management module is configured to manage all resources in the external resource cluster except the resource used for deploying the extension management module, the basic management module is configured to manage the resource used for deploying the extension management module. The basic management module may be deployed across regions, so that the basic management module has a disaster recovery capability in different regions, to ensure reliability of the basic management module.

Optionally, the basic management module may include at least one of the basic common service and the necessary middleware. The basic common service is a service required for running the basic management module. For example, the basic common service may be a database service. The necessary middleware is middleware required for running the basic management module. For example, the necessary middleware may be a cache and a message queue. In this case, step 303 is actually that the underlying management module deploys the entire basic management module based on the internal resource cluster. In an implementation, an implementation process includes: The underlying management module creates a second virtual instance cluster based on the internal resource cluster, and deploys the entire basic management module in the second virtual instance cluster. A virtual instance cluster includes a plurality of virtual instances. In this embodiment of this application, the virtual instance may be a container or a virtual machine. For example, the second virtual instance cluster may be a K8s cluster, and the basic management module may be software that has a management function and that is implemented in a container form.

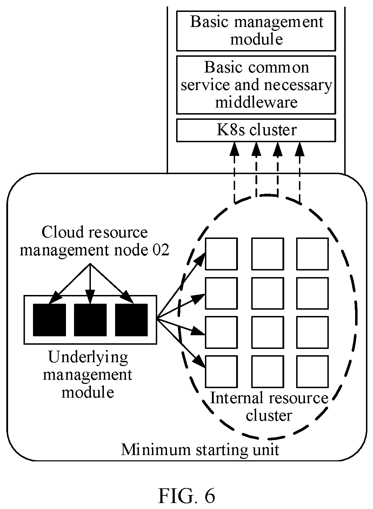

Alternatively, the basic management module may not include at least one of the basic common service and the necessary middleware. In this case, step 303 is actually that the underlying management module deploys at least one of the basic common service and the necessary middleware based on the internal resource cluster, and deploys the basic management module based on at least one of the basic common service and the necessary middleware. For an implementation process of deploying the basic management module, refer to related descriptions in the preceding paragraph. An implementation process in which the underlying management module deploys at least one of the basic common service and the necessary middleware based on the internal resource cluster includes: The underlying management module creates a third virtual instance cluster based on the internal resource cluster, and deploys at least one of the basic common service and the necessary middleware in the third virtual instance cluster. For example, the third virtual instance cluster may be a K8s cluster, and the basic common service and the necessary middleware may be software that has related functions and that is implemented in a container form. As shown in FIG. 6, the underlying management module may create a K8s cluster based on the internal resource cluster, and separately deploy the basic common service, the necessary middleware, and the basic management module in the K8s cluster. The second virtual instance cluster and the third virtual instance cluster may be instance clusters created by the underlying management module based on the entire internal resource cluster at one time, or may be instance clusters created by the underlying management module in a plurality of steps, each time based on some resources in the internal resource cluster. This is not specifically limited in embodiments of this application.

When the basic management module does not include the basic common service or the necessary middleware, the basic common service and the necessary middleware are first deployed based on the internal resource cluster, and the basic management module is deployed based on the basic common service and the necessary middleware. In this way, sharing of cross-cloud service public capabilities is maximized, implementation costs of the basic management module are reduced, and deployment complexity of the basic management module is reduced. The deployment implementation reflects a service on service (service on service) principle. The service on service principle means that an upper-layer service should be deployed based on a layered, stable, and sustainable underlying cloud service.

After step 303 is performed, deployment of a most basic management subsystem in the cloud resource management system is completed. The most basic management subsystem is a minimum scale form in the cloud resource management system that maintains a normal running status when the service volume of the tenant is the minimum. Therefore, the most basic management subsystem is also referred to as a minimum starting unit (minimum starting unit, MSU) of the cloud resource management system. For example, a scope of the minimum starting unit is shown in FIG. 6. The minimum starting unit includes: a most underlying completely self-contained computing and storage root service, an internal resource cluster managed by the root service, a basic common service and necessary middleware provisioned based on the internal resource cluster, and a basic management module that manages an external resource cluster of a specific scale. It can be learned that the minimum starting unit exists independently of the external resource cluster, and is completely decoupled from the external resource cluster. This achieves fault isolation between the minimum starting unit and the external resource cluster. In addition, a scale of the minimum starting unit is controlled, and does not increase with a capacity of the external resource cluster, so that costs of the cloud resource management system are effectively controlled. The minimum starting unit is equivalent to a basic input/output system (basic input/output system, BIOS) of a computer, and is a most solid and reliable bastion of the cloud resource management system. The minimum starting unit can boot and initialize the entire cloud resource management system at a minimum cost and can extend a complete cloud resource management system based on the minimum starting unit. This ensures that the complete cloud resource management system can be gradually rebuilt based on the minimum starting unit even after a severe disaster occurs.

Step 304: The basic management module manages a basic resource group in the external resource cluster.

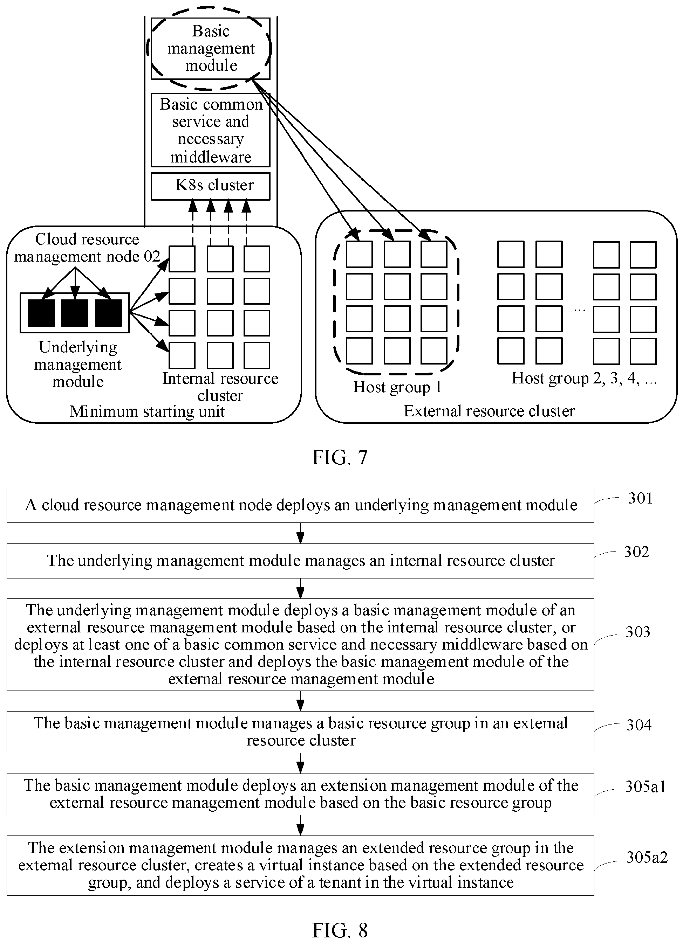

The basic management module manages the basic resource group in the external resource cluster by performing operations such as installation of an operating system, allocation of an IP address, and installation of a client on a server that provides the basic resource group. After performing the operations such as the installation of the operating system, the allocation of the IP address, and the installation of the client on the server that provides the basic resource group, the basic management module can obtain a resource usage condition of the server through the client and allocate a resource of the server. Therefore, the basic resource group can be managed. As shown in FIG. 7, a host group 1 in FIG. 7 provides the basic resource group in the external resource cluster. The host group 1 includes a plurality of servers. The basic management module may perform operations such as installation of an operating system, allocation of an IP address, and installation of a client on each server in the host group 1, to manage the basic resource group.

Step 305: The basic management module provides the cloud service for the tenant based on the basic resource group.

The basic management module provides the cloud service for the tenant based on the basic resource group in a plurality of manners. The following describes implementations of step 305 by using implementations in which the basic management module directly and indirectly provides the cloud service for the tenant based on the basic resource group as examples.

In a first implementation of step 305, the basic management module indirectly provides the cloud service for the tenant based on the basic resource group. As shown in FIG. 8, an implementation process of step 305 includes the following steps.

Step 305a1: The basic management module deploys the extension management module of the external resource management module based on the basic resource group.

It can be learned from the foregoing descriptions that the basic management module of the external resource management module is a minimum starting unit of the cloud resource management system. The minimum starting unit is a minimum scale form in the cloud resource management system that maintains the normal running status. When the service volume of the tenant increases, a scale of resources managed by the cloud resource management system needs to be increased. For example, if a scale of the external resource cluster is increased, a scale of the cloud resource management system needs to be increased accordingly. In this case, the basic management module may deploy the extension management module based on the basic resource group, to manage increased resources based on the extension management module. The process of deploying the extension management module may be considered as a process of extending the external resource management module when the service volume increases. In this way, the basic management module is deployed based on the internal resource cluster, and the extension management module is deployed based on the external resource cluster, so that a resource occupied by the basic management module can be effectively controlled, and a scale of a minimum starting unit can be limited. When a scale of the external resource cluster needs to change in accordance with the service volume, the scale of the minimum starting unit does not need to increase with the scale of the external resource cluster, so that the minimum starting unit has characteristics of being stable and reliable, and construction costs of the cloud resource management system are reduced.

Optionally, step 305a1 may be implemented in a plurality of manners. The following two implementations are used as examples for description below.

In a first implementation of deploying the extension management module, that the basic management module deploys the extension management module based on the basic resource group includes: The basic management module creates a first virtual instance cluster based on the basic resource group, and deploys the extension management module in the first virtual instance cluster. For example, the first virtual instance cluster may be a container cluster management system K8s cluster, and the extension management module may be software that has a management function and that is implemented in a container form.

In a second implementation of deploying the extension management module, that the basic management module deploys the extension management module based on the basic resource group includes: The basic management module creates a first virtual instance cluster based on the basic resource group; and the underlying management module deploys the extension management module in the first virtual instance cluster. In this implementation, the first virtual instance cluster may be a container cluster management system K8s cluster, and the extension management module may be software that has a management function and that is implemented in a container form.

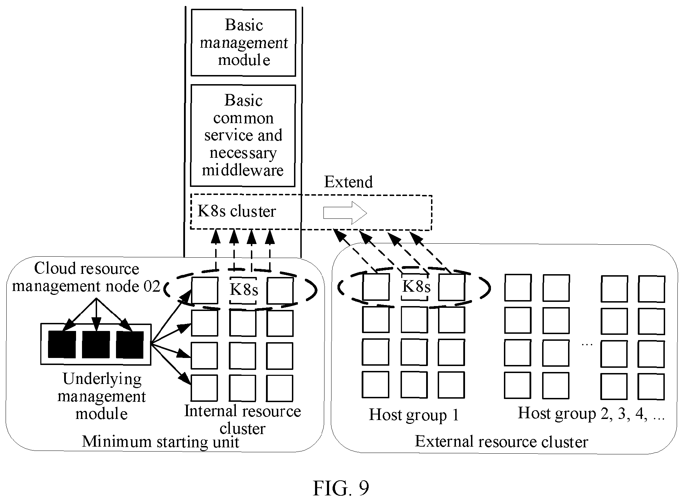

In the second implementation, it may be considered that the basic management module provides a capability of virtualizing a virtual instance cluster based on a resource. After the basic management module creates the first virtual instance cluster, the underlying management module schedules the first virtual instance cluster, and deploys the extension management module based on the first virtual instance cluster. After the basic management module creates the first virtual instance cluster, the basic management module may provide related information of the first virtual instance cluster for the underlying management module, so that the underlying management module schedules the first virtual instance cluster based on the related information. Before the underlying management module schedules the first virtual instance cluster, the underlying management module may combine the first virtual instance cluster and the second virtual instance cluster into one virtual instance cluster, and schedule an expanded virtual instance cluster. A process of combining the first virtual instance cluster and the second virtual instance cluster may be considered as adding the first virtual instance cluster based on the second virtual instance cluster, to extend the second virtual instance cluster to a large logical cluster that crosses the internal resource cluster and the external resource cluster. For example, as shown in FIG. 9, when both the first virtual instance cluster and the second virtual instance cluster are K8s clusters, a K8s cluster created based on the basic resource group and a K8s cluster created based on the internal resource cluster may be combined by using a Virtual Kubelet technology, to extend the K8s cluster created based on the internal resource cluster to a large logical cluster that crosses the internal resource cluster and the external resource cluster. When the second virtual instance cluster and the third virtual instance cluster are different clusters, the underlying management module combines the first virtual instance cluster, the second virtual instance cluster, and the third virtual instance cluster. For an implementation process of the combination, correspondingly refer to the implementation process of combining the first virtual instance cluster and the second virtual instance cluster. Further, to ensure isolation between the first virtual instance cluster and the second virtual instance cluster, the internal resource cluster and the external resource cluster may be isolated from each other, and an independent resource cluster management technology is used.

Optionally, the external resource management module may include a plurality of extension management modules. Any two of the extension management modules may be isolated from each other, and/or the basic management module may be isolated from any one of the extension management modules. For example, the external resource management module may use a grid (grid) architecture. To be specific, the entire external management module uses a multi-service grid form, and the basic management module and each extension management module each are an independent service grid. When any two of the extension management modules are isolated from each other, fault propagation between the extension management modules can be avoided, so that reliability of the extension management modules is ensured. Similarly, when the basic management module and the extension management modules are isolated from each other, fault propagation between the extension management modules and the basic management module can be avoided, so that reliability of the extension management modules and the basic management module is ensured.

Step 305a2: The extension management module manages an extended resource group in the external resource cluster, creates a virtual instance based on the extended resource group, and deploys the service of the tenant in the virtual instance.

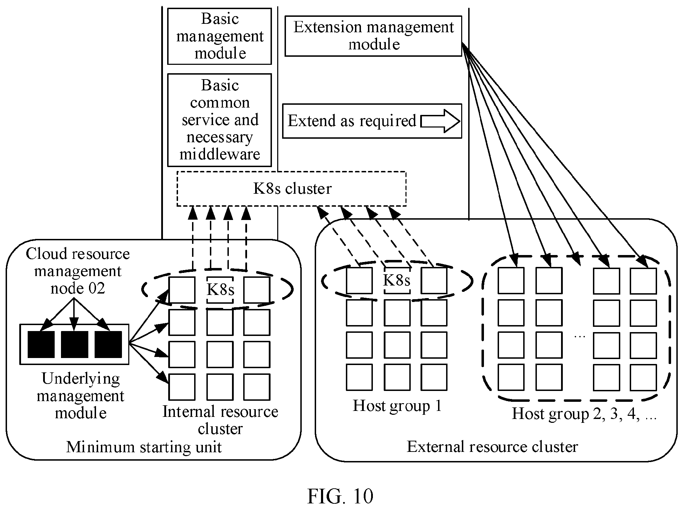

After the extension management module is deployed, the extension management module manages the extended resource group by performing operations such as installation of an operating system, allocation of an IP address, and installation of a client on a server in the extended resource group. For example, as shown in FIG. 10, host groups 2, 3, 4, and the like in FIG. 10 provide extended resource groups in the external resource cluster. These host groups each include a plurality of servers. The extension management module may perform operations such as installation of an operating system, allocation of an IP address, and installation of a client on each server in these host groups, to manage the extended resource group. After the extension management module manages the extended resource group, when the cloud service needs to be provided for the tenant, a virtual instance may be created based on the extended resource group, and the service of the tenant may be deployed in the virtual instance, to provide the cloud service for the tenant.

In a second implementation of step 305, the basic management module directly provides the cloud service for the tenant based on the basic resource group. An implementation process includes: The basic management module creates a virtual instance based on the basic resource group and deploys the service of the tenant in the virtual instance. For example, after the basic management module manages the basic resource group, when the cloud service needs to be provided for the tenant, the basic management module may create a virtual instance based on the basic resource group and deploy the service of the tenant in the virtual instance, to provide the cloud service for the tenant.

Optionally, in addition to deploying the service of the tenant based on the basic resource group, the basic management module may further deploy the extension management module based on the basic resource group. The extension management module is configured to: manage the extended resource group in the external resource cluster, create the virtual instance based on the extended resource group, and deploy the service of the tenant in the virtual instance. For an implementation of deploying the extension management module and an implementation of deploying the service of the tenant by the extension management module, correspondingly refer to the foregoing related content. Details are not described herein again.

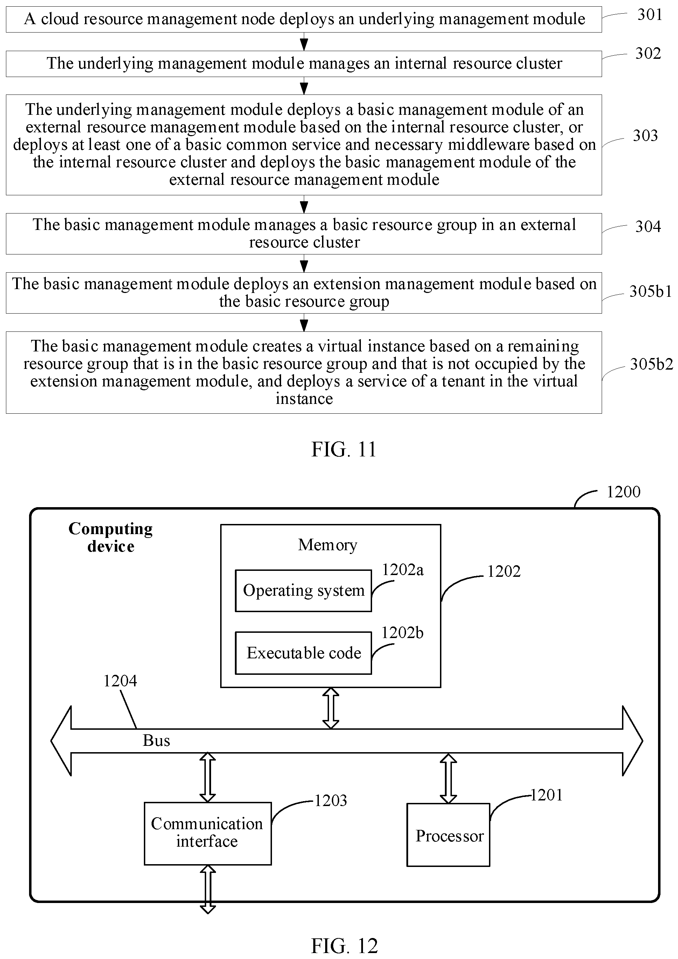

In an implementation, the extension management module is configured to manage the extended resource group in the external resource cluster, and provide the cloud service for the tenant based on the extended resource group. To ensure that the extended resource group can be effectively used, the extension management module may have a priority of using the basic resource group compared with the virtual instance used for deploying the service of the tenant. In other words, when the basic management module may preferentially use the basic resource group to deploy the extension management module, and the service of the tenant needs to be deployed, the basic management module creates a virtual instance based on a remaining resource group that is in the basic resource group and that is not occupied by the extension management module, and deploys the service of the tenant in the virtual instance. For example, as shown in FIG. 11, before the basic management module creates the virtual instance based on the basic resource group, and deploys the service of the tenant in the virtual instance, the method further includes the following step:

Step 305b1: The basic management module deploys the extension management module based on the basic resource group.

For an implementation process of step 305b1, correspondingly refer to the implementation process of step 305a1. Details are not described herein again.

In this case, as shown in FIG. 11, that the basic management module creates the virtual instance based on the basic resource group, and deploys the service of the tenant in the virtual instance includes step 305b2: The basic management module creates the virtual instance based on a remaining resource group that is in the basic resource group and that is not occupied by the extension management module, and deploys the service of the tenant in the virtual instance.

It can be learned from the foregoing content that the minimum starting unit is configured to provide an initial specification of various services (including the basic management module, the basic common service, and the necessary middleware) deployed in the minimum starting unit to meet resource requirements of normal service load. In time of peak demand for a service, the extension management module needs to be deployed in the external resource cluster, to improve a service processing capability of the resource cluster. Therefore, after the peak demand for the service subsides, resources occupied by the service in an external resource pool may be released in a timely manner, including releasing the resources used for deploying the corresponding service and resources occupied by the extension management module, to implement scaling of resources, so as to optimize cost occupation of the cloud resource management system.

In conclusion, in the deployment method of the cloud resource management system provided in embodiments of this application, the underlying management module that is completely independent of outside resources and that is in the minimum starting unit is first constructed, and the underlying management module is used to manage the internal resource cluster. The basic management module of the external resource management module, the basic common service, and the necessary middleware are deployed based on the internal resource cluster. Next, the extension management module of the external resource management module is constructed, so that a management and control plane of the cloud resource management system is extended and deployed from the minimum starting unit to the external resource cluster. This manner of constructing the cloud resource management system based on bootstrapping and partial order dependencies can ensure that a scale of an internal resource pool of the minimum starting unit is limited, and help improve overall resource utilization, to effectively reduce construction costs of the cloud resource management system. In addition, the method for implementing deployment of an entire cloud resource management system based on the minimum starting unit not only enables the cloud resource management system to have a capability of managing and controlling an ultra-large-scale infrastructure resource pool, but also implements isolation between the minimum starting unit and the external resource cluster while controlling costs of the cloud resource management system, to avoiding mutual fault spreading. Moreover, when the cloud resource management system provisions virtual instances of a same resource form during resource management and control, it can be ensured that the minimum starting unit is simple and stable enough, and self-containment of the minimum starting unit is easy to be implemented, to ensure reliability of the cloud resource management system. In addition, most deployment resources required for the extension management module are extended in an external resource pool and share the resource pool with the tenant. This greatly avoids fragmentation of a hardware resource pool and helps reduce costs.

It should be noted that a sequence of the steps of the deployment method of the cloud resource management system provided in embodiments of this application may be appropriately adjusted, or the steps may be correspondingly added or deleted based on a case. Any method variation readily figured out by a person skilled in the art within the technical scope disclosed in this application shall fall within the protection scope of this application. Therefore, details are not described.

The foregoing describes the deployment method of the cloud resource management system in embodiments of this application. In correspondence to the foregoing method, an embodiment of this application further provides a cloud resource management system. FIG. 7 and FIG. 10 are diagrams of structures of a cloud resource management system according to an embodiment of this application. It should be understood that the cloud resource management system may include more additional modules than the shown modules, or some shown modules may be omitted. This is not limited in embodiments of this application. Optionally, the cloud resource management system may be configured on a cloud platform. As shown in FIG. 7, the cloud resource management system may include a cloud resource management node, an underlying management module, and an external resource management module.

The underlying management module is configured to manage an internal resource cluster, and deploy a basic management module of the external resource management module based on the internal resource cluster.

The external resource management module is configured to manage an external resource cluster. The external resource management module includes the basic management module, and the basic management module is configured to: manage a basic resource group in the external resource cluster, create a virtual instance based on the basic resource group, and deploy a service of a tenant in the virtual instance.

In the cloud resource management system, the basic management module manages only the basic resource group in the external resource cluster, rather than all resources in the external resource cluster. In this way, a quantity of resources in the external resource cluster that are managed by the basic management module is controlled, and a resource occupied by the basic management module is effectively controlled, to reduce a probability that a scale of the basic management module increases with a scale of the external resource cluster, thereby helping reduce construction costs of the cloud resource management system. In addition, the basic management module manages some resources in the external resource cluster, to provide a condition for the basic management module to extend an entire management and control plane of the cloud resource management system based on the external resource cluster, so that the cloud resource management system has a capability of managing and controlling an ultra-large-scale infrastructure resource pool.

In an implementation, as shown in FIG. 10, the system further includes an extension management module of the external resource management module. In this case, the basic management module is specifically configured to deploy the extension management module based on the basic resource group. The basic management module specifically provides a cloud service for the tenant through the extension management module. For example, the extension management module is configured to: manage an extended resource group in the external resource cluster, create the virtual instance based on the extended resource group, and deploy the service of the tenant in the virtual instance.

Alternatively, the basic management module is specifically configured to create the virtual instance based on the basic resource group, and deploy the service of the tenant in the virtual instance.

Optionally, in this implementation, the basic management module is further configured to deploy the extension management module based on the basic resource group. The basic management module is specifically configured to create the virtual instance based on a remaining resource group that is in the basic resource group and that is not occupied by the extension management module, and deploy the service of the tenant in the virtual instance.

The foregoing process of deploying the extension management module may be considered as a process of further deploying the external resource management module when a service volume increases. In this way, the basic management module is deployed based on the internal resource cluster, and the extension management module is deployed based on the external resource cluster, so that a remaining resource group occupied by the basic management module can be effectively controlled, and a scale of a minimum starting unit can be limited. When a scale of the external resource cluster needs to change in accordance with the service volume, the scale of the minimum starting unit does not need to increase with the scale of the external resource cluster, so that the minimum starting unit has characteristics of being stable and reliable, and construction costs of the cloud resource management system are reduced.

In an implementation, the basic management module is specifically configured to create a first virtual instance cluster based on the basic resource group, and deploy the extension management module in the first virtual instance cluster.

In another implementation, the basic management module is specifically configured to create the first virtual instance cluster based on the basic resource group; and the underlying management module is further configured to deploy the extension management module in the first virtual instance cluster.

Optionally, a resource used for deploying the underlying management module is isolated from the external resource cluster, and/or isolated from the internal resource cluster. In addition, the internal resource cluster and the external resource cluster may be isolated from each other.

Optionally, to further ensure security of the cloud resource management system, the underlying management module may be deployed on a plurality of cloud resource management nodes, so that the underlying management module has a disaster recovery capability.

In an implementation, the underlying management module is specifically configured to create a second virtual instance cluster based on the internal resource cluster, and deploy the basic management module of the external resource management module in the second virtual instance cluster.

Optionally, the basic management module may include at least one of a basic common service and necessary middleware. The common service is a service that is shared by cloud services that can be provided by the cloud resource management system by using the external resource cluster. For example, the common service may be a database service. The necessary middleware is middleware required by all cloud services that can be provided by the cloud resource management system by using the external resource cluster. For example, the necessary middleware may be a cache and a message queue.

Alternatively, the basic management module may not include at least one of the basic common service and the necessary middleware. In an implementation, an implementation process in which the underlying management module deploys at least one of the basic common service and the necessary middleware based on the internal resource cluster includes: The underlying management module creates a third virtual instance cluster based on the internal resource cluster, and deploys at least one of the basic common service and the necessary middleware in the third virtual instance cluster.

A subsystem that includes the underlying management module and the basic management module may be considered as a most basic management subsystem in the cloud resource management system. The most basic management subsystem is a minimum scale form in the cloud resource management system that maintains a normal running status when the service volume of the tenant is the minimum. Therefore, the most basic management subsystem is also referred to as a minimum starting unit of the cloud resource management system. The minimum starting unit includes: a most underlying completely self-contained computing and storage root service, an internal resource cluster managed by the root service, a basic common service and necessary middleware provisioned based on the internal resource cluster, and a basic management module that manages an external resource cluster of a specific scale. It can be learned that the minimum starting unit exists independently of the external resource cluster, and is completely decoupled from the external resource cluster. This achieves fault isolation between the minimum starting unit and the external resource cluster. In addition, a scale of the minimum starting unit is controlled, and does not increase with a capacity of the external resource cluster, so that costs of the cloud resource management system are effectively controlled. The minimum starting unit is equivalent to a basic input/output system of a computer, and is a most solid and reliable bastion of the cloud resource management system. The minimum starting unit can boot and initialize the entire cloud resource management system at a minimum cost and can extend a complete cloud resource management system based on the minimum starting unit. This ensures that the complete cloud resource management system can be gradually rebuilt based on the minimum starting unit even after a severe disaster occurs.

Optionally, the external resource management module may include a plurality of extension management modules. Any two of the extension management modules may be isolated from each other, and/or the basic management module may be isolated from any one of the extension management modules. In an implementation, the virtual instance is a container or a virtual machine.

In conclusion, the cloud resource management system provided in this embodiment of this application can ensure that a scale of an internal resource pool of the minimum starting unit is limited, and help improve overall resource utilization, to effectively reduce construction costs of the cloud resource management system. In addition, the cloud resource management system is obtained through deployment based on the minimum starting unit, so that the cloud resource management system not only has the capability of managing and controlling the ultra-large-scale infrastructure resource pool, but also implements isolation between the minimum starting unit and the external resource cluster while controlling costs of the cloud resource management system, to avoid mutual fault spreading. Moreover, when the cloud resource management system provisions virtual instances of a same resource form during resource management and control, it can be ensured that the minimum starting unit is simple and stable enough, and self-containment of the minimum starting unit is easy to be implemented, to ensure reliability of the cloud resource management system. In addition, most deployment resources required for the extension management module are extended in an external resource pool and share the resource pool with the tenant. This greatly avoids fragmentation of a hardware resource pool and helps reduce costs.

It may be clearly understood by a person skilled in the art that, for the purpose of convenient and brief description, for a detailed working process of the foregoing cloud resource management system and each module, refer to corresponding content in the foregoing method embodiments. Details are not described herein again.

An embodiment of this application provides a computing device. The computing device is configured to implement some or all functions of the deployment method of the cloud resource management system provided in embodiments of this application. FIG. 12 is a diagram of a structure of a computing device according to an embodiment of this application. As shown in FIG. 12, the computing device 1200 includes a processor 1201, a memory 1202, a communication interface 1203, and a bus 1204. The processor 1201, the memory 1202, and the communication interface 1203 are communicably connected to each other through the bus 1204.

The processor 1201 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core (single-CPU) processor, or a multi-core (multi-CPU) processor. The dedicated hardware chip is a hardware module capable of performing high-performance processing. The dedicated hardware chip includes at least one of a digital signal processor, an application-specific integrated circuit (application-specific integrated circuit, ASIC), a field programmable gate array (field programmable gate array, FPGA), or a network processor (network processor, NP). The processor 1201 may alternatively be an integrated circuit chip and has a signal processing capability. In an implementation process, some or all of the functions of the deployment method of the cloud resource management system in this application may be implemented by using an integrated logic circuit of hardware in the processor 1201 or instructions in a form of software.

The memory 1202 is configured to store a computer program, and the computer program includes an operating system 1202a and executable code (namely, program instructions) 1202b. For example, the memory 1202 is a read-only memory, another type of static storage device that can store static information and instructions, a random access memory, another type of dynamic storage device that can store information and instructions, an electrically erasable programmable read-only memory, a compact disc read-only memory, another optical disk storage, an optical disc storage (including a compact disc, a laser disc, an optical disc, a digital versatile disc, a Blu-ray disc, or the like), a magnetic disk storage medium, another magnetic storage device, or any other medium that can be configured to carry or store expected executable code in a form of instructions or a data structure and that can be accessed by a computer. This is not limited thereto. For example, the memory 1202 is configured to store an egress port queue. For example, the memory 1202 exists independently, and is connected to the processor 1201 through the bus 1204. Alternatively, the memory 1202 is integrated with the processor 1201. The memory 1202 may store the executable code. When the executable code stored in the memory 1202 is executed by the processor 1201, the processor 1201 is configured to perform some or all of the functions of the deployment method of the cloud resource management system provided in embodiments of this application. For an implementation in which the processor 1201 performs this process, correspondingly refer to related descriptions in the foregoing embodiments. The memory 1202 may further include a software module, data, and the like that are required by another running process such as the operating system.

The communication interface 1203 uses a transceiver module, for example, but not limited to a transceiver, to implement communication with another device or a communication network. For example, the communication interface 1203 may be any one or any combination of the following components having network access functions: a network interface (for example, an Ethernet interface) and a wireless network interface card.

The bus 1204 is any type of communication bus configured to implement an interconnection between internal components (for example, the memory 1202, the processor 1201, and the communication interface 1203) in the computing device, for example, a system bus. In this embodiment of this application, an example in which the foregoing components in the computing device are interconnected through the bus 1204 is used for description. Optionally, the foregoing components in the computing device 1200 may be communicably connected to each other in another connection manner other than a manner using the bus 1204. For example, the foregoing components in the computing device 1200 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

All or some of the foregoing embodiments may be implemented by using software, hardware, firmware, or any combination thereof. When software is configured to implement the foregoing embodiments, all or some of the embodiments may be implemented in a form of a computer program product. A computer program product that provides a program development platform includes one or more computer instructions. When these computer program instructions are loaded and executed on a computing device, all or some of the functions of the deployment method of the cloud resource management system provided in embodiments of this application are implemented.

The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line) or wireless (for example, infrared, radio, or microwave) manner. The computer-readable storage medium stores the computer program instructions that provide the program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of at least one computing device included in the computing device cluster, refer to the computing device 1200 shown in FIG. 12. A memory 1202 in one or more computing devices 1200 in the computing device cluster may store a same instruction used for performing the deployment method of the cloud resource management system.

In some possible implementations, the memory 1202 in the one or more computing devices 1200 in the computing device cluster may alternatively separately store some instructions used for performing the deployment method of the cloud resource management system. In other words, a combination of the one or more computing devices 1200 may jointly execute an instruction used for performing the deployment method of the cloud resource management system.

It should be noted that memories 1202 in different computing devices 1200 in the computing device cluster may store different instructions that are respectively used for performing some functions of the cloud resource management system. In other words, instructions stored in the memories 1202 in different computing devices 1200 may implement functions of one or more of a first determining module, a second determining module, and a third determining module.

In some possible implementations, a plurality of computing devices in the computing device cluster may be connected over a network. The network may be a wide area network, a local area network, or the like. Any two of the computing devices are connected over a network. Specifically, a communication interface in each computing device is connected to the network. In these possible implementations, each computing device includes a bus, a processor, a memory, and a communication interface.

An embodiment of this application further provides a computer-readable storage medium. The computer-readable storage medium is a non-volatile computer-readable storage medium, and the computer-readable storage medium includes program instructions. When the program instructions are run on a computing device, the computing device is enabled to implement the deployment method of the cloud resource management system provided in embodiments of this application.

An embodiment of this application further provides a computer program product including instructions. When the computer program product runs on a computer, the computer is enabled to implement the deployment method of the cloud resource management system provided in embodiments of this application.

A person of ordinary skill in the art may understand that all or some of the steps of the foregoing embodiments may be implemented by hardware or a program instructing related hardware. The program may be stored in a computer-readable storage medium. The memory medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, original data, executable code, and the like in this application are obtained under full authorization.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and the principle of this application shall fall within the protection scope of this application.

## Claims

1. A cloud resource management system, comprising a cloud resource management node, an underlying management module, and an external resource management module, wherein
the cloud resource management node is configured to deploy the underlying management module;
the underlying management module is configured to manage an internal resource cluster, and deploy the external resource management module based on the internal resource cluster; and
the external resource management module is configured to manage an external resource cluster, wherein the external resource management module comprises a basic management module, and the basic management module is configured to: manage a basic resource group in the external resource cluster, create a virtual instance based on the basic resource group, and deploy a service of a tenant in the virtual instance.

2. The system according to claim 1, wherein the external resource management module further comprises an extension management module;
the basic management module is further configured to deploy the extension management module based on the basic resource group; and
the extension management module is configured to: manage an extended resource group in the external resource cluster, create a virtual instance based on the extended resource group, and deploy the service of the tenant in the virtual instance.

3. The system according to claim 1, wherein the external resource management module further comprises an extension management module;
the basic management module is further configured to deploy the extension management module based on the basic resource group, and the extension management module is configured to manage an extended resource group in the external resource cluster; and
the basic management module is further configured to create a virtual instance based on a remaining resource group that is in the basic resource group and that is not occupied by the extension management module, and deploy the service of the tenant in the virtual instance.

4. The system according to claim 2 or 3, wherein
the basic management module is further configured to create a first virtual instance cluster based on the basic resource group, and deploy the extension management module in the first virtual instance cluster.

5. The system according to claim 2 or 3, wherein
the basic management module is further configured to create a first virtual instance cluster based on the basic resource group; and
the underlying management module is further configured to deploy the extension management module in the first virtual instance cluster.

6. The system according to any one of claims 1 to 5, wherein
the underlying management module is further configured to create a second virtual instance cluster based on the internal resource cluster, and deploy the external resource management module in the second virtual instance cluster.

7. The system according to any one of claims 1 to 6, wherein the basic management module comprises at least one of the basic common service and the necessary middleware.

8. The system according to any one of claims 1 to 6, wherein the system further comprises at least one of the basic common service and the necessary middleware; and
the underlying management module is further configured to deploy at least one of the basic common service and the necessary middleware based on the internal resource cluster.

9. The system according to claim 8, wherein
the underlying management module is further configured to create a third virtual instance cluster based on the internal resource cluster, and deploy at least one of the basic common service and the necessary middleware in the third virtual instance cluster.

10. A deployment method of a cloud resource management system, wherein the method is applied to the cloud resource management system, the cloud resource management system comprises a cloud resource management node, an underlying management module, and an external resource management module, and the method comprises:
deploying, by the cloud resource management node, the underlying management module;
managing, by the underlying management module, an internal resource cluster, and deploying the external resource management module based on the internal resource cluster; and
managing, by the external resource management module, an external resource cluster, wherein the external resource management module comprises a basic management module, and the basic management module manages a basic resource group in the external resource cluster, creates a virtual instance based on the basic resource group, and deploys a service of a tenant in the virtual instance.

11. The method according to claim 10, wherein the external resource management module further comprises an extension management module, and the method further comprises:
deploying, by the basic management module, the extension management module based on the basic resource group; and
managing, by the extension management module, an extended resource group in the external resource cluster, creating a virtual instance based on the extended resource group, and deploying the service of the tenant in the virtual instance.

12. The method according to claim 10, wherein the external resource management module further comprises an extension management module, and the method further comprises:
deploying, by the basic management module, the extension management module based on the basic resource group, wherein the extension management module is configured to manage an extended resource group in the external resource cluster; and
creating, by the basic management module, a virtual instance based on a remaining resource group that is in the basic resource group and that is not occupied by the extension management module, and deploying the service of the tenant in the virtual instance.

13. The method according to claim 11 or 12, wherein the deploying, by the basic management module, the extension management module based on the basic resource group comprises:
creating, by the basic management module, a first virtual instance cluster based on the basic resource group, and deploying the extension management module in the first virtual instance cluster.

14. The method according to claim 11 or 12, wherein the deploying, by the basic management module, the extension management module based on the basic resource group comprises:
creating, by the basic management module, a first virtual instance cluster based on the basic resource group; and
deploying, by the underlying management module, the extension management module in the first virtual instance cluster.

15. The method according to any one of claims 10 to 14, wherein the deploying, by the underlying management module, the external resource management module based on the internal resource cluster comprises:
creating, by the underlying management module, a second virtual instance cluster based on the internal resource cluster, and deploying the external resource management module in the second virtual instance cluster.

16. The method according to any one of claims 10 to 15, wherein the basic management module comprises at least one of the basic common service and the necessary middleware.

17. The method according to any one of claims 10 to 15, wherein the method further comprises:
deploying, by the underlying management module, at least one of the basic common service and the necessary middleware based on the internal resource cluster.

18. The method according to claim 17, wherein the deploying, by the underlying management module, at least one of the basic common service and the necessary middleware based on the internal resource cluster comprises:
creating, by the underlying management module, a third virtual instance cluster based on the internal resource cluster, and deploying at least one of the basic common service and the necessary middleware in the third virtual instance cluster.

19. A computing device cluster, comprising a plurality of computing devices, wherein the plurality of computing devices comprise a plurality of processors and a plurality of memories, the plurality of memories store program instructions, and the plurality of processors run the program instructions, to enable the computing device cluster to perform the method according to any one of claims 10 to 18.

20. A computer-readable storage medium, comprising program instructions, wherein when the program instructions are run on a computing device, the computing device is enabled to perform the method according to any one of claims 10 to 18.

21. A computer program product, wherein when the computer program product runs on a computer, the computer is enabled to perform the method according to any one of claims 10 to 18.
